# EUROPEAN PATENT APPLICATION

(11) **EP 1 617 496 A1**
(43) Date of publication of application: **18.01.2006**
(21) Application number: 05105931.9
(22) Date of filing: 30.06.2005
(51) Int. Cl.: H01M 2/18, H01M 2/16, H01M 8/24

(54) **Process for manufacturing plate electrode stackings**

(30) Priority: 14.07.2004 US 890144
(71) Applicant: Amer-Sil S.A., 8287 Kehlen (LU)
(72) Inventor: Lambert, Urbain, 8323, Capellen (LU)
(74) Representative: Kihn, Pierre Emile Joseph

(57) **Abstract**

A process for manufacturing of a plate electrode stacking for use in batteries, comprising the steps of supplying a separator material comprising a polymer sheet layer with an overlapping portion and a glass mat layer, placing a positive plate electrode onto the glass mat layer, folding and wrapping this separator material around the positive plate electrode, attaching an overlapping portion to form a sleeved plate electrode, and placing a negative plate electrode onto the sleeved positive plate electrode.

## Description

### Background of the invention

The present invention relates to a process for manufacturing plate electrode stackings for use in electrochemical cells, such as batteries, and a separator material for use in such a process.

Lead acid batteries are widely used and include adjacent positive and negative electrodes immersed in an electrolyte and spaced by separators.

The electrodes used in the manufacture of such batteries are generally made of lead dioxide for the positive electrode and lead for the negative electrode. The electrodes are separated from each other by a battery separator that prevents the adjacent electrodes from coming into physical contact and that provides space for an electrolyte.

Two different lead acid battery designs are used commercially: the flooded cell and the recombinant cell.

In a flooded cell, only a small portion of the electrolyte is absorbed into the separator. Thus, the battery separator typically has ribs extending from one or both planar surfaces to provide open space for "free" electrolyte. The separator typically used in flooded cells is an extruded microporous ribbed polymer sheet.

In a recombinant cell, wherein the oxygen gas generated at the positive electrode during charge is recombined at the negative electrode to form water, the electrolyte is gelified.

Furthermore, electrodes for battery assembly often comprise an additional layer of retention mat to reduce the loss of active material.

Numerous assembly steps are necessary to manufacture an electrode stacking for use in battery assembly. Known processes often require manual steps or very complex automation equipment to manufacture protected plate electrodes or electrode stackings for use in battery assembly.

US4418464 describes an apparatus for wrapping and enveloping a battery plate with three layers of different materials.

Typically, a layer of retention tape, such as Hydramatic, is first vertically wrapped around a positive electrode and is then clamped in place using a cap or boot. In a preassembling step, a glass mat and a Koroseal layer are unrolled and heat sealed together, then cut to size. This cut laminate is then positioned below the Hydramatic and horizontally wrapped around the electrode and its ends are sealed together. In an additional step, the wrapped positive electrode, a polyethylene separator cut to size and a negative electrode are alternatively positioned and stacked to form an electrode stacking for use in a battery.

Prior art methods are either labor intensive and time consuming, implying partially manual procedures, or require complex and expensive equipment to automate the numerous cutting, folding, wrapping, assembling and sealing steps.

### Summary of the invention

The object of the present invention is therefore to provide a process for manufacturing a plate electrode stacking for use in battery assembly, which allows a simplified, efficient and more economical procedure, while ensuring safe and high quality assembly. A further object of the invention is to provide a separator material for use in such a process.

In order to overcome the abovementioned problems, the present invention proposes a process for manufacturing of a plate electrode stacking for use in batteries, comprising the steps of
a) supplying a separator material comprising a polymer sheet layer and a glass mat layer, or a separator material comprising a polymer sheet layer reinforced with a polyester mat and a glass mat layer, dimensions of said glass mat layer being chosen in order to leave an overlapping portion of said polymer sheet layer uncovered,
b) placing a positive plate electrode onto said glass mat layer of the separator material,
c) folding and wrapping said separator material around said positive plate electrode,
d) attaching said overlapping portion to form a sleeve with an upper and a lower open end, and
e) placing a negative plate electrode onto said sleeve containing the positive plate electrode.

The invention allows the manufacturing of electrode stackings with alternate positive and negative plate electrodes ready for insertion in a battery case, while necessitating a reduced number of discrete operating steps. The enveloping of the electrode with the separator material can actually be achieved in a single basic folding and wrapping operation, which essentially consist in bending both sides of the separator material around the electrode. The fact that one single separator is needed to replace the current several separately folded layers of Hydramatic, glass mat, Koroseal and PE separator significantly reduces the number of required steps and hence increases the productivity of the operation. It also greatly facilitates the implementation of the process in a fully automated continuous system and, as a consequence, the reliability of the manufacturing process. Furthermore, the combined polymer sheet and glass mat separator improves the packing and the performance of the battery.

Hence, the present process is particularly advantageous for the battery manufacturer as high quality batteries may be obtained without complicated and expensive machinery.

The separator material used in step a) comprises a polymer sheet layer and a glass mat layer, the dimensions of the latter being chosen in order to leave an overlapping portion of said polymer sheet uncovered. In fact, the size of the glass mat is chosen to allow a complete wrap around the plate electrode, both sides of the wrapped glass mat forming a flush joint. The polymer sheet layer is larger than the glass mat layer to form an overlapping portion upon wrapping in step c).

The polymer sheet may be made of any suitable porous, hydrophilic and chemically stable polymer or copolymer, or mixtures of such (co)polymers, providing sufficient flexibility, appropriate porosity, low electrical resistance and high puncture resistance. A particularly preferred polymer sheet comprises porous or microporous polyvinyl chloride, containing silica, the silica being preferably physically bonded to the polymer. The thickness of the polymer sheet layer largely depends on the constituents used and the technical requirements of the separator inside the electrochemical cell. Generally, its thickness will range from 0.15 to 5.00 mm, preferably from 0.50 to 4.00 mm.

The polymer sheet can be reinforced by a mat for instance a mat made out of polyester which adheres with or without any adhesive after corrugation to the polymer sheet.

The role of the glass mat layer is to prevent loss of the active material. Although the thickness of such a glass mat may vary as a function of technical and economical considerations, it will generally be chosen in a range of 0.15 to 5.00 mm, preferably 0.40 to 2.00 mm.

The polymer sheet and the glass mat layer which make up the separator material are preferably attached together by any suitable means, e.g. using glue, hot-melt adhesive, etc.

In a further embodiment of the present invention, the polymer sheet is provided on at least part of its surface with corrugations, i.e. the polymer sheet is altered to display a wrinkled cross-section usually forming a parallel straight or sinusoidal surface pattern. This configuration is advantageous as corrugated polymer sheets exhibit improved physical properties compared to a standard ribbed separator. Depending on the polymer material used, the corrugation process may advantageously increase the volume porosity of the polymer sheet, thus reducing acid displacement and electrical resistance.

The corrugation of flat polymer sheets may be achieved by optionally heating the sheet and passing it between two corrugating rolls with generally complementary embossing patterns. A particularly preferred design of corrugation rolls will be described below.

As mentioned above, the overlapping portion of the polymer sheet is attached after folding and wrapping in step c) on the underlying polymer sheet by any appropriate means, such as gluing, hot-melt gluing, etc.

In the overlapping portion, the attachment of two layers of polymer sheet will generally result in an increased thickness of the resulting sleeve. This might be considered as a disadvantage during the electrode stacking and during its placement in the electrochemical cell. One option is to leave these parts uncorrugated, thereby reducing the thickness of the seam. Another, preferred option is to modify the shape and/or the extent of the corrugations in such a way that in the overlapping portion both polymer sheet layers closely fit together without getting such an extra thickness.

Therefore, in a further embodiment, the corrugations may be adapted on one or more parts of said polymer sheet, e.g. the overlapping portion and/or the overlapped portion, to avoid an excessive thickness in the overlapping part of the resulting sleeve. This can be achieve for example by using corrugation rolls showing a embossing pattern as described more in detail below.

In a further embodiment of the invention, the polymer sheet is not provided with corrugations on portions forming lateral edges of the sleeve containing the positive plate electrode. The lack of corrugations along the lateral sides of the sleeve is of particular advantage not only to facilitate the folding and wrapping in step c), but also to tightly control the width of the resulting sleeved electrode, thereby ensuring an optimal fit of the stackings inside the electrochemical cell.

To further enhance the retention of electrode material inside the sleeve and to further reduce the incidence of a short-circuit during charging and discharging operations, the process according to the invention, in a still further embodiment, preferably comprises the additional step of closing one of said open ends of the sleeve, in particular the lower open end, using any appropriate means, such as welding, gluing or, preferably, using a clip.

The clip used to close the lower end of the sleeve may be a preformed clip, preferably with a U-shaped cross section or, in a preferred embodiment, the clip is a U-shaped clip formed by heating and subsequently shaping a flat stock of polymer ribbon during the process, e.g. using a forming shoe or the like.

As explained above, the present process is particularly aimed at the battery manufacturer and therefore the separator material is preferably provided in a ready to use form, preferably cut to size according to the manufacturer's requirements. Hence, in a further embodiment, the separator material in step a) is supplied in leaf form and its size and corrugation pattern being adapted for the manufacture of a sleeved electrode.

Although the manufacturing steps described above appear as discrete and separate manufacturing steps, they may of course be combined in space or in time to further optimize the overall process or to reduce the time needed per electrode stacking. As an example, steps c) and d) may combined by directly attaching said overlapping portion during folding and wrapping, e.g. by first applying glue onto the overlapping portion and by subsequently folding and wrapping the separator material.

A further aspect of the invention provides for a separator material for use in a process according to the invention, comprising a polymer sheet layer, and, attached on one surface thereto, a glass mat sheet layer, wherein said polymer sheet is provided with corrugations on at least part of its surface and the dimension of said glass mat sheet layer being chosen to leave an overlapping portion of said polymer sheet uncovered.

As already explained above, in a preferred embodiment, the corrugations of the polymer sheet may be adapted on one or more parts of said polymer sheet to reduce the overall thickness in the overlapping portion of the resulting sleeved electrode.

Furthermore, the polymer sheet is preferably not provided with corrugations on one or more portions, in particular along the lateral sides of a sleeved electrode manufactured according to a process of the invention, to facilitate folding of said separator material and/or to control its shape upon folding. As stated above, the lack of corrugations along the lateral sides of the sleeve not only facilitates the folding and wrapping step, but also allows to tightly control the shape and especially the width of the resulting sleeved electrode, thereby ensuring a optimal fit of the stackings inside the electrochemical cell.

### Brief description of the drawings

Fig. 1 is a schematic drawing of a conventional process showing the individual steps needed for the manufacture of a plate electrode stacking.
Fig. 2 is a schematic drawing of a process according to a preferred embodiment of the present invention showing the individual steps needed for the manufacture of a plate electrode stacking, wherein Fig. 2A is a side view and Fig 2B a top view of a preferred embodiment.
Fig. 3A and 3B are isometric views of steps b) and c) respectively, according to a preferred embodiment of the present invention.
Fig. 4A illustrates a preferred roll design for the corrugation of a separator material for use in the present invention and Fig. 4B and Fig. 4C are detailed views of Fig. 4A.

### Detailed description of the invention

The abovementioned and further objects of the present invention will be more apparent from the following description of a not limiting embodiment with reference to the attached drawings.

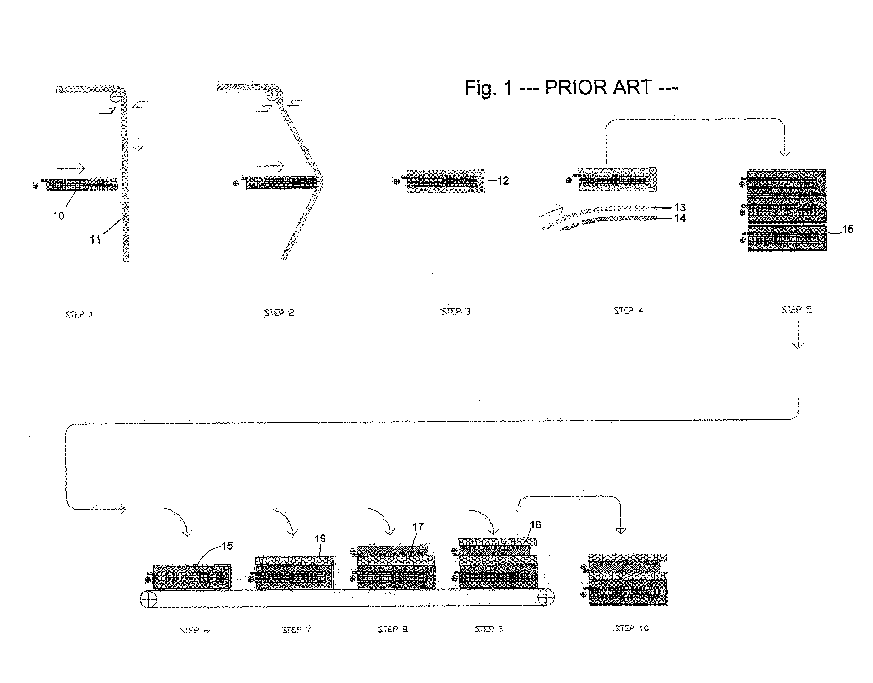

In Fig. 1, which represents a prior art process for the manufacture of electrode plate stackings, the positive plates 10 are placed onto an assembly belt.

In step 1, the Hydramatic 11 is unrolled vertically and taken by the advancing plates 10 in the middle. The Hydramatic 11 is cut to size and U-wrapped around the plate 10 in step 2. In step 3, the Hydramatic 11 is fixed with a clip to the bottom of the plate 10 by forming and mounting a cap or boot 12. In step 4, the glass mat 14 and the Koroseal 13 are unrolled beneath the chain conveyor, heat sealed together on an inline hot roller, then cut on a rotary knife against a back-up roll. This cut laminate is then positioned below the Hydramatic 11 and guided with "tooth jigs" on the main conveyor. The folding around the edges is accomplished with a shoe-like fixed anvil. An inline heat tape is used to seal the Koroseal into a vertical seam and onto the bottom cap 12. In step 5, the protected positive plates 15, comprising a positive plate 10, a Hydramatic layer 11, a boot or cap 12, a layer of glass mat 13 and a layer of Koroseal 14, are then piled by vacuum or fork lifters onto stacks.

The stacks are transported to the assembly station (for example a Tekmax stacker) in step 6, where a protected positive plate 15 is placed on a conveyor belt. In step 7, a first separator 16 is lifted with vacuum heads onto the protected positive plate 15. In step 8, a negative plate 17 is laid on this first separator 16. The positioning of a second separator 16 on the negative plate 17 is accomplished in step 9. Finally, in step 10, the units from step 9 comprising a protected positive plate 15, a first separator 16, a negative plate 17 and a second separator 16, are piled up to form the electrode stackings for use in the battery assembly.

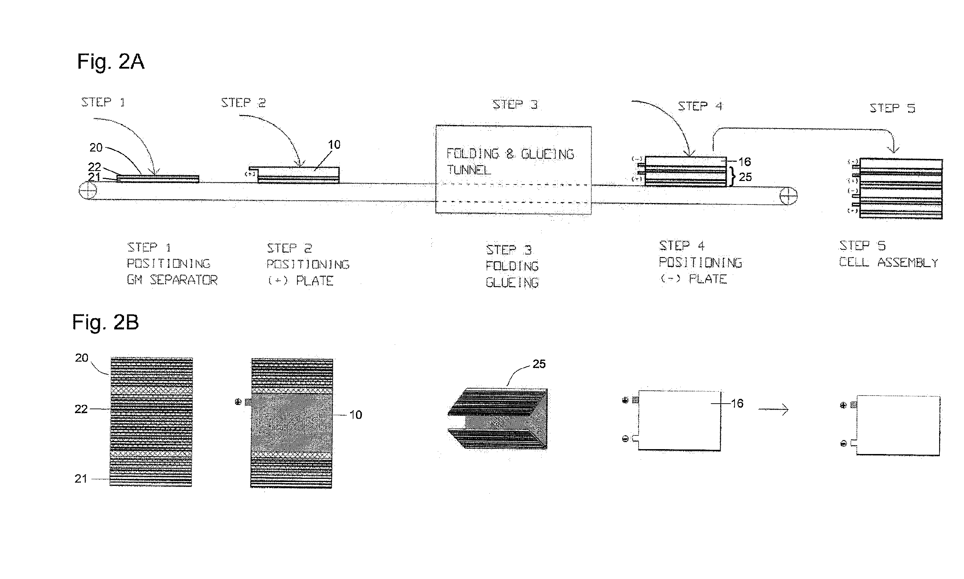

In Fig. 2a, resp. 2b, the separator material 20 according to the invention, comprising a corrugated polymer sheet layer 21 and a glass mat layer 22 is positioned on a conveyor belt in step 1. In step 2, the positive plate electrode 10 is then placed on the separator material 20 with the glass mat layer 22 toward the positive plate 10.

In step 3, the folding and wrapping of the separator material 20 around the plate may be accomplished manually or preferably with a continuous folding in an automated step. In order to close the sleeve permanently, a strip of glue is applied on one side of the overlapping part and pressed together with a shoe, thereby forming a protected or sleeved positive plate electrode 25, comprising a positive plate electrode 10 wrapped in a separator material 20 according to the invention.

The bottom of the sleeve may or may not be closed with a clip using a flat stock of PVC ribbon (step not represented). This ribbon is heated by a forming shoe to shape it and in the same time flattening the space of the separator were it is applied on.

In step 4, a negative plate electrode 15 is positioned on the sleeved electrode 25 and the resulting units, comprising a sleeved electrode 25 and a negative plate 15, are piled up in step 5 to form the electrode stackings for use in the battery assembly.

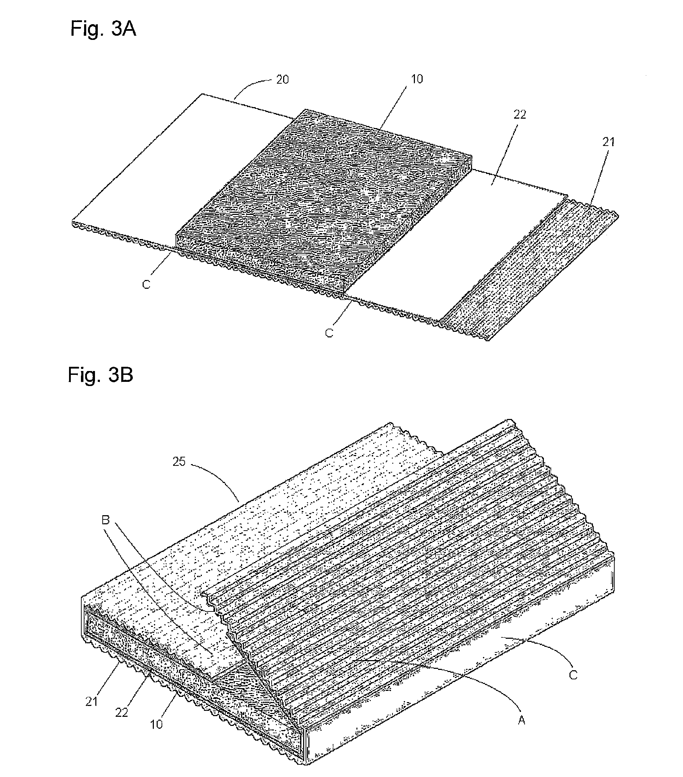

Fig. 3A and 3B show the main steps of a process according to the invention. In Fig. 3A, a positive plate electrode 10 is placed on a separator material 20 comprising a polymer sheet layer 21 and attached thereto a glass mat layer 22. The width of the latter is chosen to form a flush joint after the folding and wrapping, whereas the polymer layer is wider so as to define an overlapping portion which is not covered by the glass mat layer. The portions C of the separator material which later form the lateral sides of the protected envelope are not corrugated in this preferred embodiment.
Fig. 3B depicts the situation at the end of the folding and wrapping step wherein the separator material is going to be attached, e.g. glued in the overlapping portion to form a protected or sleeved plate electrode 25, comprising the separator material with layers 21 and 22 and the positive plate electrode 10. Layer 21, which is the polymer sheet, has a general corrugation profile A over most of its surface, whereas the portions C forming the sides of the sleeved plate 25 are uncorrugated. In at least one of the portions B in the overlapping part (or in both overlapping and overlapped portions) of the sleeve, these corrugations are preferably adapted to prevent oversized seams.

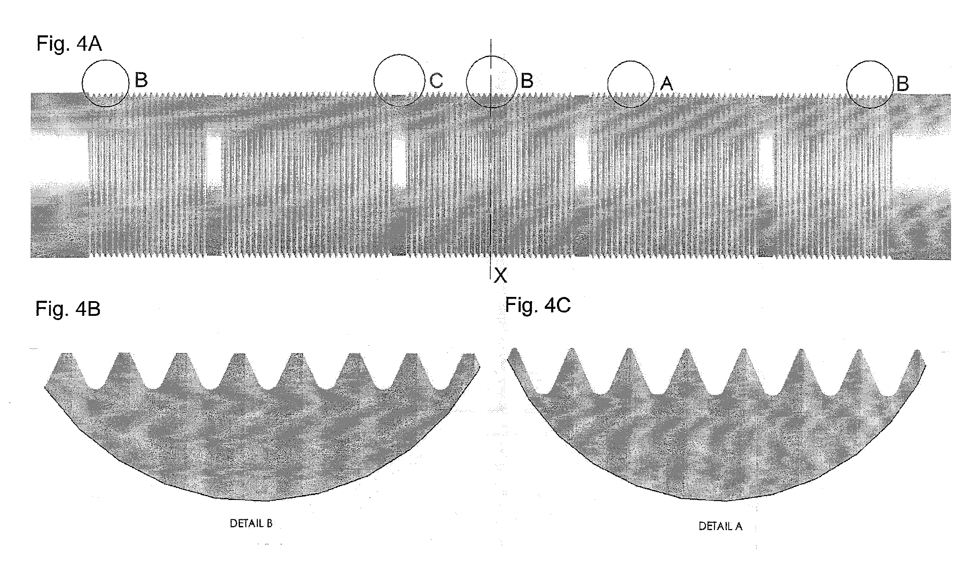

Fig. 4A illustrates a typical roll which may be used to corrugate the polymer sheet layer. In fact, the corrugating roll shown allows the corrugation of a double width (see line X) of polymer sheet layer which may be cut after corrugation or preferably after the attachment of the glass mat layer. A detailed view of the general corrugation profile A is shown in Fig. 4C. As mentioned above, to reduce the overall thickness of the sleeve in the overlapping part, this general profile is adapted, e.g. as shown in reference B, or in the enlarged view in Fig. 4B, by reducing the height of the embossing ribs, thereby allowing a better fit in the overlapping part. Portions referenced C display the uncorrugated lateral parts of the resulting sleeved plate electrode.

## Claims

1. Process for manufacturing of a plate electrode stacking for use in batteries, comprising the steps of
a) supplying a separator material comprising a polymer sheet layer and a glass mat layer, dimensions of said glass mat layer being chosen in order to leave an overlapping portion of said polymer sheet layer uncovered,
b) placing a positive plate electrode onto said glass mat layer of the separator material,
c) folding and wrapping said separator material around said positive plate electrode,
d) attaching said overlapping portion to form a sleeve with an upper and a lower open end, and
e) placing a negative plate electrode onto said sleeve containing the positive plate electrode.

2. Process according to claim 1, wherein said polymer sheet layer is reinforced with a polyester mat.

3. Process according to claim 1 or claim 2, wherein said polymer sheet is provided on at least part of its surface with corrugations.

4. Process according to claim 3, wherein said corrugations are adapted on one or more parts of said polymer sheet to reduce the overall thickness in said overlapping portion.

5. Process according to claim 3 or claim 4, wherein said polymer sheet is not provided with corrugations on portions forming lateral edges of the sleeve containing the positive plate electrode.

6. Process according to any of the preceding claims, further comprising the step of closing one of said open ends of said sleeve with a clip.

7. Process according to claim 6, wherein said clip is a U-shaped clip formed by heating and subsequently shaping a flat stock of polymer ribbon.

8. Process according to any of the preceding claims, wherein said separator material is supplied in leaf form.

9. Separator sheet for use in a process according to any of the preceding claims, comprising
- a polymer sheet layer optionally reinforced with a polyester mat, and, attached on one surface thereto,
- a glass mat sheet layer,
wherein said polymer sheet is provided with corrugations on at least part of its surface and the dimension of said glass mat sheet layer being chosen to leave an overlapping portion of said polymer sheet uncovered.

10. Separator sheet according to claim 9, wherein said corrugations are adapted on one or more parts of said polymer sheet to reduce the overall thickness in said overlapping portion.

11. Separator sheet according to claim 9 or claim 10, wherein said polymer sheet is not provided with corrugations on one or more portions to facilitate folding of said separator and/or to control its shape upon folding.
